# EUROPÄISCHE PATENTSCHRIFT

(11) **EP 3 697 639 B1**
(45) Veröffentlichungstag und Bekanntmachung des Hinweises auf die Patenterteilung: **09.06.2021**
(21) Anmeldenummer: 18796375.6
(22) Anmeldetag: 18.10.2018
(51) Int. Cl.: B60K 7/00, B60K 1/00

(54) **ELEKTRISCHE ANTRIEBSEINHEIT UND KRAFTFAHRZEUG**
ELECTRICAL POWER UNIT AND MOTOR VEHICLE
UNITÉ D'ENTRAÎNEMENT ÉLECTRIQUE ET VÉHICULE À MOTEUR

(30) Priorität: 20.10.2017 DE 102017124592
(43) Veröffentlichungstag der Anmeldung: 26.08.2020
(73) Patentinhaber: thyssenkrupp AG, 45143 Essen (DE)
(72) Erfinder: BARNA, Szimandl, 9473 Gams (CH)
(74) Vertreter: thyssenkrupp Intellectual Property GmbH
(86) Internationale Anmeldenummer: PCT/EP2018/078571
(87) Internationale Veröffentlichungsnummer: WO 2019/077049

(56) Entgegenhaltungen:
- EP-A1- 2 479 053
- EP-A1- 2 942 218
- DE-A1-102005 018 907
- DE-A1-102009 000 712

## Beschreibung

Die Erfindung betrifft eine elektrische Antriebseinheit mit den Merkmalen des Oberbegriffs des Anspruchs 1 sowie ein Kraftfahrzeug. Eine derartige Antriebseinheit ist beispielsweise aus DE 10 2005 018 907 A1 bekannt.

Der Einsatz elektrifizierter Antriebe stellt die Bremsentechnologie vor neue Herausforderungen.

Hierzu zählen insbesondere:
- die Bewältigung des (im Vergleich zum Verbrennungsmotor) hohen Trägheitsmoments des elektrischen Traktionsmotors. Dieses Moment muss beim Verzögern des Fahrzeugs abgefangen werden, weshalb vergleichsweise größere Bremsanlagen als bei verbrennungsmotorischen Antriebssträngen benötigt werden. Ein alternativer Ansatz ist die Entkopplung des elektrischen Traktionsmotors vom Antriebsstrang durch eine separate Kupplung, wobei der elektrische Traktionsmotor die Energie weiterhin gespeichert hat. Dies kann vorteilhaft sein, da der Traktionsmotor als Schwungrad wirkt.
- die begrenzten Möglichkeiten des regenerativen Bremsens: Zwar kann durch den Generatorbetrieb eines elektrischen Traktionsmotors ein Bremsmoment bereitgestellt werden; dies nur jedoch, wenn hierzu ein entsprechender Abnehmer vorhanden ist. Ein Abnehmer kann eine nicht vollständig geladene Batterie sein. Limitiert ist das regenerative Bremsen jedoch bei vollen Batterien, jedoch auch bei nahezu voll geladenen Batterien (>80%) aufgrund der schwer regelbaren Nichtlinearitäten der Batterie, weshalb das regenerative Bremsen nicht für ein (zuverlässiges) redundantes Bremssystem taugt (Beispiel: alpine Bergfahrt/Abfahrt). Eine Alternative hierzu ist das Widerstandsbremsen, bei dem ein separater elektrischer Widerstand an den elektrischen Traktionsmotor geschaltet wird und die von dem elektrischen Traktionsmotor erzeugte Energie in Wärme umwandelt.
- der Einsatz von Motordirektbremsen (auf der Welle des elektrischen Traktionsmotors sitzende Bremseinrichtungen) ist beschränkt aufgrund der hochdrehenden Elektromotoren (20.000 rpm und höher), die hohe Ansprüche an Bremspartner (Bremsbelag und Scheibe) stellen und für die industrielle Massenfertigung bzw. bestimmte Marktsegmente zu kostspielig sind.
- Zentralbremsen am Getriebeausgang besitzen zwar kleinere Drehzahlen, haben aber den Nachteil, dass die dort anliegenden Momente entsprechend größer sind, weshalb die erforderlichen Kräfte des Bremsaktuators hoch sein müssen. Insbesondere für den Einsatz von elektromechanischen und elektrohydraulischen Bremsen ist dies nachteilig, da diese im Vergleich zu hydraulischen Bremsen relativ groß bauen.

DE 10 2005 018 907 A1 beschreibt ein Differentialgetriebe für eine elektrisch angetriebene Antriebsachse mit einer Zentralbremse, die den Differentialkorb des Differentialgetriebes und das Achswellenrad gegenüber dem Differentialgetriebegehäuse abbremst. Die Zentralbremse ist dazu als nasslaufende Lamellenbremse ausgebildet. Die bekannte Antriebsachse ist aufwendig aufgebaut und kostenintensiv.

Der Erfindung liegt die Aufgabe zu Grunde, eine elektrische Antriebseinheit zum Antrieb mindestens zweier Räder eines Kraftfahrzeugs anzugeben, die einfach aufgebaut ist und trotzdem die speziellen Anforderungen möglichst weitgehend erfüllt, die an eine Zentralbremse einer elektrischen Antriebseinheit gestellt werden. Der Erfindung liegt ferner die Aufgabe zu Grunde, ein Kraftfahrzeug anzugeben.

Erfindungsgemäß wird diese Aufgabe durch eine elektrische Antriebseinheit mit den Merkmalen des Anspruchs 1 gelöst. Mit Blick auf das Kraftfahrzeug wird die Aufgabe durch den Gegenstand des Anspruchs 21 gelöst.

Konkret wird die Aufgabe durch eine elektrische Antriebseinheit zum Antrieb mindestens zweier Räder eines Kraftfahrzeugs gelöst, die eine ausschließlich elektrisch antreibbare Radachse aufweist. Die Radachse ist mit wenigstens einem elektrischen Traktionsmotor zur Übertragung eines Antriebsmoments sowie mit einer Zentralbremse zu Übertragung eines Bremsmoments verbunden. Die Antriebseinheit weist ein Übersetzungsgetriebe mit wenigstens zwei Getriebestufen mit einer Getriebezwischenwelle auf, die zwischen dem Traktionsmotor und der Radachse angeordnet ist. Die Zentralbremse ist dabei in die Getriebezwischenwelle des Übersetzungsgetriebes integriert. Eine Getriebestufe kann dabei z.B. von einem Stirnradpaar gebildet werden.

Die Zentralbremse ist dabei als Betriebsbremse eingerichtet.

Unter einer Betriebsbremse ist eine Bremse zu verstehen, welche in Abgrenzung zu Park- oder Haltebremsen (Feststellbremse), eingerichtet ist, ein Fahrzeug auch aus hohen Geschwindigkeiten abzubremsen und dazu große Energien z.B. in Wärme umzusetzen. Die von einer Betriebsbremse aufzubringenden Bremskräfte sind höher als die von Parkbremsen. Die Bremskraft ist vorzugsweise höher als 40 Kilonewton. Die Betriebsbremse ist selbstlösend ausgebildet. Selbstlösend bedeutet dabei, dass eine Bremskraft nur unter Zufuhr äußerer Energie aufrechterhalten werden kann. Die Zustelleinrichtung einer Betriebsbremse ist im Gegensatz zu Parkbremsen außerdem dazu eingerichtet, den Zustellvorgang schnell zu bewirken, insbesondere im Bereich von Millisekunden.

Eine Parkbremse ist im Wesentlichen dazu eingerichtet, eine bereits stehendes Fahrzeug zu blockieren. Eine Parkbremse hält eine Bremskraft ohne äußere Energiezufuhr aufrecht. Das heißt, eine Parkbremse ist selbsthemmend eingerichtet. Eine Parkbremse hat geringe Anforderungen an Stellkraft und Stellgeschwindigkeit von beispielsweise 20 Kilonewton und 500 Millisekunden.

Die Erfindung hat den Vorteil, dass durch die Integration der Zentralbremse in die Getriebezwischenwelle des Übersetzungsgetriebes die Drehzahl und das anliegende Moment auf die Zentralbremse optimal abgestimmt werden können. Es ist daher möglich, die Zentralbremse einfach aufzubauen. Aufwändige Bremssysteme, die im Wesentlichen die gleiche Wirkung hervorrufen, sind nicht erforderlich.

Die Erfindung bezieht sich auf ausschließlich elektrisch antreibbare Radachsen, bzw. auf vergleichbare Radachsen, bei denen das Antriebsmoment ausschließlich durch einen elektrischen Traktionsmotor aufgebracht wird (elektrifizierter Antrieb).

In einer vorteilhaften Ausgestaltungsform weist die Radachse ein Differentialgetriebe auf. Besonders bevorzugt weist die Antriebseinheit ein Übersetzungsgetriebe mit wenigstens zwei Getriebestufen mit einer Getriebezwischenwelle, die zwischen dem Traktionsmotor und dem Differentialgetriebe angeordnet ist, auf. Durch den Einsatz des Differentialgetriebes ist es möglich, mit einem einzigen Motor, zwei Räder einer Achse anzutreiben, auch im Falle dass die Räder bei einer Kurvenfahrt unterschiedliche Rotationsgeschwindigkeiten aufweisen müssen.

In einer anderen vorteilhaften Ausgestaltungsform weist die Antriebseinheit zwei unabhängige Radachsen (Halbachsen) auf. Die Antriebseinheit ist als Zwillingsantrieb ausgebildet. Zwillingsantrieb bedeutet, dass wenigstens zwei Räder/Radachsen durch jeweils einen Traktionsmotor angetrieben sind. Die Traktionsmotoren sind untereinander nicht unmittelbar verbunden. Die Radachsen sind untereinander nicht unmittelbar verbunden. Dadurch kann insbesondere auf ein mechanisches Differentialgetriebe verzichtet werden.

Im Unterschied zur radindividuellen Radnabenantrieben ist die erfindungsgemäße Antriebseinheit zum Antrieb wenigstens zweier Räder vorgesehen. Die Antriebseinheit ist nicht innerhalb der Radnabe verbaut. Sie ist mit einem von der Radnabe beanstandeten Traktionsmotor ausgestattet. Die Antriebseinheit ist nicht als schwingende Masse an die Radachse gekoppelt. Die Antriebseinheit ist starr mit dem Fahrzeugrahmen verbunden.

Die Erfindung ist besonders geeignet für elektrifizierte Fahrzeuge mit hohen Bauraumbeschränkungen, insbesondere elektrischen Personenkraftwagen. Andere Fahrzeuge, bei denen Zentralbremsen verwendet werden, sind von der Erfindung ebenfalls umfasst. Unter einer Zentralbremse wird eine Bremseinheit verstanden, die nicht am Rad unmittelbar oder radnah angreift, sondern am oder im Antriebsstrang verbaut ist.

Bevorzugte Ausführungsformen sind in den Unteransprüchen angegeben.

Die Getriebestufe des Übersetzungsgetriebes kann eine Ausgangswelle aufweisen, die mit Abstand zur Radachse, insbesondere parallel beabstandet zur Radachse, angeordnet und mit der Zentralbremse verbunden ist. Im Unterschied zu Rad nahen Bremssysteme oder zu Bremssysteme, die direkt in die Radachse integriert sind, führt die Beabstandung der Ausgangswelle zur Radachse zu einem Bauraumgewinn für die Zentralbremse.

Bei einer weiteren bevorzugten Ausführungsform weist das Übersetzungsgetriebe mehrere Getriebestufen mit wenigstens einer Zwischenwelle auf, bei welcher die Zwischenwelle mit der Zentralbremse verbunden ist. Durch Auslegung und Anzahl der Getriebestufen können das anliegende Drehmoment und die Zentralbremse optimal abgestimmt werden. Es genügt eine relativ geringe Zupresskraft der Zentralbremse, um die erforderliche Bremswirkung zum Abbremsen des Fahrzeugs und seiner rotierenden Massen wie etwa Motor, Getriebe und Rädern zur Verfügung zu stellen. Außerdem kann eine elektrische Bremse, beispielsweise eine elektromechanische Bremse, als Zentralbremse verwendet werden.

Die Getriebewellen sind vorteilhaft achsparallel zur Welle des Traktionsmotors. Die Getriebewellen sind vorteilhaft achsparallel zur Radantriebsachse.

Eine besonders kostengünstige und einfache Ausgestaltung ergibt sich, wenn das Übersetzungsgetriebe schaltungsfrei ausgebildet ist. Dasselbe gilt, wenn die Zentralbremse als trocken laufende Friktionsbremse ausgebildet ist.

Die Zentralbremse kann die einzige Fahrzeugbremse bilden. Mit anderen Worten kann auf die Radindividualbremsen verzichtet werden. Alternativ ist es auch möglich, dass die Radachse Radindividualbremsen zusätzlich zur Zentralbremse aufweist. Die Erfindung bietet also die Voraussetzung dafür, dass unterschiedliche Bremssystemkonzepte im Zusammenhang mit einem elektrischen Antrieb verwirklicht werden können.

Die Zentralbremse kann auch als Park- oder Haltebremse genutzt werden. Dadurch kann auf eine separate Park- oder Haltebremse verzichtet werden. Im Gegensatz zu Parkbremsen, die ein formschlüssiges Blockieren des Antriebsstranges bewirken, etwa vermittels einer Sperrklinke, weist eine als Friktionsbremse ausgeführte und auch als Park- oder Haltebremse genutzte Zentralbremse kein Spiel auf. Spiel meint dabei insbesondere den Bewegungsspielraum, den ein formschlüssiges Sperrelement zwischen einem ersten und zweiten Anschlag besitzt. Ein begrenztes Rollen des Fahrzeuges, wie es insbesondere beim Haltebremsen mit einer formschlüssigen Park- oder Haltebremse am Hang auftritt, tritt nicht bzw. in nur unwesentlichem Maße auf. Die Zentralbremse kann dazu in einem bestimmten Bereich der Zustelleinrichtung selbsthemmend ausgebildet sein. Der selbsthemmende Bereich ist nicht identisch mit einem für die Betriebsbremsfunktion genutzten Bereichs.

Vorzugsweise weisen der Traktionsmotor und die Zentralbremse gemeinsam genutzte Peripherieeinrichtungen auf. Dadurch kommt es zur Synergieeffekten, die Vorteile für die Funktionalität der Antriebseinheit bringen und Kosten sparen. Peripherieeinrichtungen unterstützen die Grundfunktionen des Traktionsmotors und der Zentralbremse, und betreffen beispielsweise den mechanischen Schutz, die Steuerung oder die Kühlung dieser Komponenten.

So können wenigstens die Zentralbremse, das Übersetzungsgetriebe und der Traktionsmotor in einem gemeinsamen Gehäuse angeordnet sein. Die Antriebseinheit baut dadurch kompakt und kann gegebenenfalls modular verwendet werden.

Vorzugsweise weisen wenigstens die Zentralbremse und der Traktionsmotor ein gemeinsames Steuergerät auf. Dadurch können besondere Steuerfunktionen im Bremsbetrieb einfach umgesetzt werden. Beispielsweise kann das Steuergerät für eine Mischbremsung konfiguriert sein. Mischbremsung meint die Aufteilung eines gewünschten Gesamtbremsmomentes auf verschiedene Bremseinrichtungen, etwa einer Zentralbremse, regeratives Bremsen eines elektrischen Traktionsmotors oder Radindividualbremsen.

Diese Ausführungsform ist besonders im Zusammenhang mit der zusätzlichen Verwendung von Radindividualbremsen geeignet.
Bei einer weiteren bevorzugten Ausführungsform weist die Zentralbremse eine Einrichtung zur Flüssigkühlung auf. Dadurch kann die Zentralbremse noch kompakter gebaut sein. Weiter vorzugsweise ist die Einrichtung zur Flüssigkühlung mit dem Motorkühlkreislauf verbunden oder verbindbar. Eine gesonderte Kühlpumpe für die Zentralbremse kann dadurch entfallen.

Ein radindividueller Bremsvorgang ohne Radindividualbremsen ist möglich, wenn die Radachse eine Torque-Vectoring Einheit aufweist. Bei dieser Ausführungsform ist die Zentralbremse die einzige Fahrzeugbremse. Diese wird mit der Torque-Vectoring Einheit kombiniert, so dass das Bremsmoment der Zentralbremse radindividuell angepasst werden kann. Unter Torque-Vectoring versteht man eine aktive Drehmomentverteilung auf die angetriebenen Räder (im Unterschied zur passiven Drehmomentverteilung durch das Differentialgetriebe).

Eine Speicherung der Schwungenergie des Traktionsmotors beim Abbremsen ist möglich, wenn eine Kupplung zwischen dem Traktionsmotor und der Zentralbremse, insbesondere zwischen dem Traktionsmotor einerseits und der Zentralbremse und dem Differentialgetriebe andererseits, angeordnet ist. Die Kupplung koppelt den Traktionsmotor beim Bremsen ab, sodass das aufzubringende Bremsmoment vergleichsweise gering ist. Die Schwungenergie des Traktionsmotors kann anderweitig genutzt werden, beispielsweise zum Anfahren.

Vorzugsweise sind die Kupplung und die Zentralbremse gemeinsam ansteuerbar. Mit anderen Worten wird beim Abbremsen die Zentralbremse automatisch vom Traktionsmotor getrennt.

Die Zentralbremse kann einen Bremsstaubkollektor (offen oder geschlossen) aufweisen, um zu verhindern, dass der beim Bremsen entstehende Abrieb in die Umgebung gelangt. Zur Verringerung von Lärmemissionen kann die Zentralbremse mit einem Torsionsdämpfer verbunden sein.

Die Erfindung wird nachfolgend mit weiteren Einzelheiten unter Bezug auf die beigefügten Zeichnungen anhand von Ausführungsbeispielen näher erläutert.

In diesen zeigen
- Fig. 1: eine schematische Darstellung eines ersten Ausführungsbeispiels nach der Erfindung mit den wichtigsten Komponenten, bei dem das Übersetzungsgetriebe mit zwei Getriebestufen und einer Getriebezwischenwelle ausgestattet ist;
- Fig. 2: eine schematische Darstellung eines zweiten erfindungsgemäßen Ausführungsbeispiels, bei dem das Übersetzungsgetriebe drei Getriebestufen und zwei Getriebezwischenwellen aufweist und zusätzlich zur Zentralbremse Radindividualbremsen vorgesehen sind;
- Fig. 3: eine schematische Darstellung eines dritten erfindungsgemäßen Ausführungsbeispiels, bei dem die Zentralbremse mit einer offenen Filtereinrichtung als Bremsstaubkollektor ausgerüstet ist;
- Fig. 4: eine schematische Darstellung eines vierten erfindungsgemäßen Ausführungsbeispiels, bei dem die Zentralbremse flüssig gekühlt und in einer geschlossenen Filtereinrichtung als Bremsstaubkollektor gekapselt ist;
- Fig. 5: eine schematische Darstellung eines fünften erfindungsgemäßen Ausführungsbeispiels, bei dem die Zentralbremse mit einer Torque-Vectoring-Einheit kombiniert ist und einen Torsionsdämpfer aufweist und
- Fig. 6: eine schematische Darstellung eines sechsten erfindungsgemäßen Ausführungsbeispiels, bei dem eine Kupplung zwischen der Zentralbremse und dem Traktionsmotor angeordnet ist;
- Fig. 7: eine schematische Darstellung eines siebten erfindungsgemäßen Ausführungsbeispiels, bei dem das Fahrzeug zweispurig und die Antriebseinheit als Zwillingsantrieb ausgebildet ist.

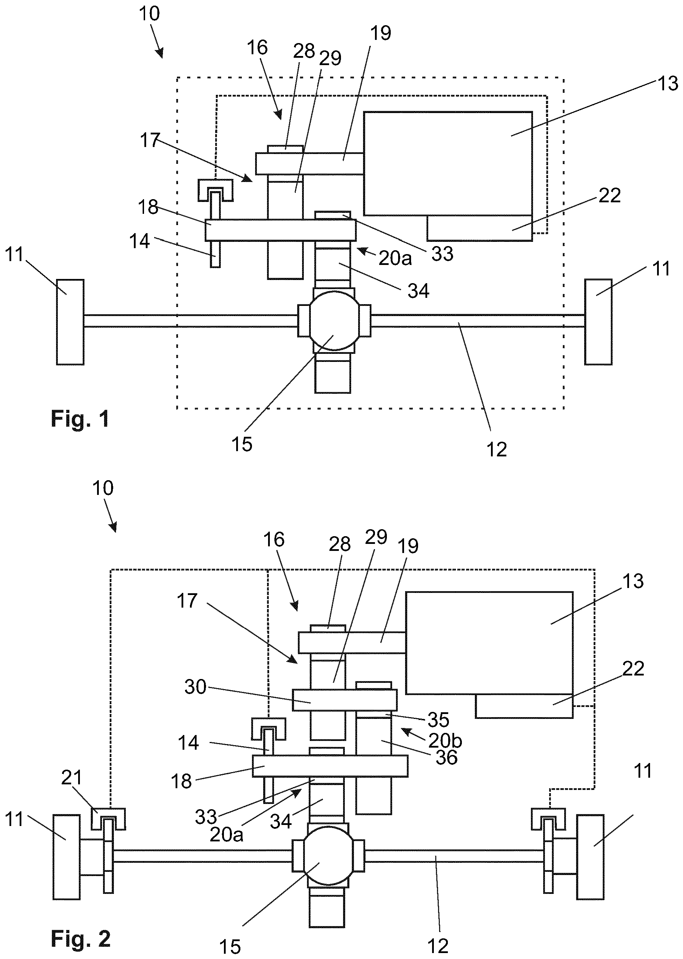

Fig. 1 zeigt ein erstes Ausführungsbeispiel einer elektrischen Antriebseinheit 10, die zum Antrieb wenigstens zweier Räder 11 eines Kraftfahrzeugs vorgesehen ist. Bei dem Kraftfahrzeug kann es sich beispielsweise um ein Personenkraftfahrzeug handeln, das eine ausschließlich elektrisch angetriebene Radachse 12 aufweist. Andere Fahrzeuge sind möglich. Die Radachse 12 ist mit den beiden angetriebenen Rädern 11 verbunden bzw. verbindbar. Die breit gestrichelte Linie zeigt die Systemgrenze der elektrischen Antriebseinheit 10 an, deren Komponenten ein Modul bilden. Im Rahmen der Erfindung wird ferner ein Kraftfahrzeug mit einer derartigen Antriebseinheit 10 offenbart und beansprucht.

Die Antriebseinheit 10 weist einen elektrischen Traktionsmotor 13 auf, der das für den Antrieb des Fahrzeugs erforderliche Antriebsmoment erzeugt und auf die Radachse 12 bzw. die Räder 11 beträgt. Die Antriebseinheit 10 weist ein Differentialgetriebe 15 auf, welches das Antriebsmoment des Traktionsmotors 13 auf die Räder 11 verteilt und Drehzahlunterschiede der Räder 11 ausgleicht. Die Antriebseinheit 10 weist ferner eine Zentralbremse 14 auf, die ein Bremsmoment erzeugt und auf die Radachse 12 bzw. die beiden Räder 11 überträgt. Im Unterschied zur radindividuellen Bremsen erzeugt die Zentralbremse 14 ein zentrales Bremsmoment, das auf die Räder 11 gemeinsam wirkt.

Die Zentralbremse 14 ist in ein Übersetzungsgetriebe 16 integriert, das wenigstens zwei Getriebestufen, bei dem Ausführungsbeispiel gemäß Fig. 1 konkret eine erste Getriebestufe 17 und eine zweite Getriebestufe 20a aufweist. Erste und zweite Getriebestufen sind zwischen Traktonsmotor und Differentialgetriebe angeordnet und über eine gemeinsame Getriebezwischenwelle gekoppelt.

Konkret weist die erste Getriebestufe 17 ein Antriebsritzel 28 auf, das mit der Eingangswelle 19 der ersten Getriebestufe 17 verbunden ist. Die Eingangswelle 19 bildet zugleich die Motorwelle des Traktionsmotors 13. Die erste Getriebestufe 17 weist ferner ein Abtriebszahnrad 29 auf, das mit einer Ausgangswelle 18 des der Getriebestufe 17 verbunden ist. Die Ausgangswelle 18 wiederum ist mit dem Differentialgetriebe 15 verbunden durch eine weitere Getriebestufe, konkret eine zweite Getriebestufe 20a. Die zweite Getriebestufe 20a weist ein erstes Zahnrad 33 auf der Ausgangswelle 18 der ersten Getriebestufe 17 auf, dass mit einem zweiten Zahnrad 34 kämmt, das mit einem Differentialkorb des Differentialgetriebe 15 verbunden ist (nicht dargestellt).

Wie in Fig. 1 zu sehen, ist die Ausgangswelle 18 der ersten Getriebestufe 17 mit der Zentralbremse 14 verbunden. Die Ausgangswelle 18 hat also zwei Funktionen. Einerseits überträgt die Ausgangswelle 18 das Antriebsmoment des Traktionsmotors 13 und andererseits das Bremsmoment der Zentralbremse 14 jeweils über das Differentialgetriebe 15 auf die Räder 11.

Durch die vorstehend beschriebene Integration der Zentralbremse 14 in eine Getriebezwischenwelle 18 des Übersetzungsgetriebes 16 wird erreicht, dass die Bremspartner der Zentralbremse 14 mit Blick auf die Drehzahl weniger stark belastet werden, als bei einer Zentralbremse, die direkt auf der Motorwelle des Traktionsmotors 13 angeordnet ist. Mit Blick auf die an sich bekannte Anordnung der Zentralbremse auf der Radachse sind die abzubremsenden Momente kleiner. Die Zentralbremse 14 kann also kleiner bauen und einfacher ausgeführt sein. Durch eine geeignete Wahl der Übersetzungsverhältnisse der Getriebestufen 17, 20a können die Zentralbremse 14 und der im Betrieb relevante Drehmomentbereich bzw. Drehzahlbereich abgestimmt werden. Dabei können die Getriebestufen 17, 20a dieselben oder unterschiedliche Übersetzungsverhältnisse aufweisen.

Wie in Fig. 1 zu erkennen ist die Ausgangswelle 18 parallel von der Radachse 12 beabstandet. Dadurch und durch die Integration der Zentralbremse 14 in das Übersetzungsgetriebe 16 wird Bauraum für die Zentralbremse 14 gewonnen und werden Bauraumbeschränkungen überwunden. Bei entsprechender Auslegung der Zentralbremse 14 können die Anforderungen an die Radbremsleistungen mitunter derart verringert werden, dass der Einsatz von heute (im Vergleich zu hydraulischen Radbremsen) noch sehr groß bauenden elektromechanischen oder elektrohydraulischen Radbremsen möglich wird.

Konkret kann die Zentralbremse 14 als trockenlaufende Friktionsbremse, insbesondere Scheibenbremse ausgebildet sein.

Die Steuerung der Zentralbremse 14 erfolgt durch ein Steuergerät 22, das sowohl die Steuerung des Traktionsmotors 13 als auch die Steuerung der Zentralbremse 14 übernimmt und entsprechend konfiguriert ist. Es ist ferner möglich, dass der Inverter des Traktionsmotor 13 in das Steuergerät 22 integriert sind. Die Signalleitung, die die Zentralbremse 14 und das Steuergerät 22 verbindet, ist durch die eng gestrichelte Linie in Fig. 1 verdeutlicht.

Folgende Synergieeffekte entstehen bei der Integration der Zentralbremse 14 in die elektrische Achseinheit bzw. Antriebseinheit:
Die vorstehend genannten Komponenten können in einem gemeinsamen Gehäuse der elektrischen Achse ausgeführt sein. Das Bremsensteuergerät kann in das Motorsteuergerät bzw. in ein gemeinsames Steuergerät 22 (Steuerung von Motor, Inverter, Bremse, ...) integriert sein (s.o.). Eine kompaktere Ausführung der Zentralbremse 14 ist durch aktive Flüssig-Kühlung der Bremseinheit, insbesondere durch Anschluss an den ohnehin vorhandenen Motorkühlkreislauf möglich (s.u.). Weiterhin besteht die Möglichkeit, ein blended braking (Mischbremsung) in dem gemeinsamen Steuergerät zu betreiben, insbesondere bei Verwendung von rein elektromechanischen/elektrohydraulischen Bremsen am Rad und zentral. Auf einfache Weise können damit unterschiedliche Betriebsmodi des Antriebsstranges realisiert werden: z.B. mechanisches Radindividualbremsen, regeneratives Motor-Bremsen, Zentralbremsen oder einer Kombination hiervon.

Der im Zusammenhang mit Fig. 1 beschriebene Aufbau der elektrischen Antriebseinheit 10 ist in den übrigen Ausführungsbeispielen entsprechend verwirklicht und wird im Zusammenhang mit den Figuren 2 bis 6 ebenfalls offenbart. Die Erfindung ist nicht auf diesen speziellen Aufbau eingeschränkt.

Die Antriebseinheit 10 gemäß Fig. 2 unterscheidet sich von der Antriebseinheit 10 gemäß Fig. 1 einerseits darin, dass das Übersetzungsgetriebe 16 weiter mehrstufig ausgebaut ist. Konkret weist das Übersetzungsgetriebe 16 drei Stufen auf, nämlich die erste und zweite Getriebestufe 17, 20a, wie in Fig. 1, und eine zusätzliche dritte Getriebestufe 20b. Außerdem ist die Antriebseinheit 10 zusätzlich zur Zentralbremse 14 mit zwei Radindividualbremsen 21 ausgestattet. Es ist auch möglich, dass das Ausführungsbeispiel gemäß Fig. 1 mit zwei Radindividualbremsen 21 ausgestattet ist.

Das Übersetzungsgetriebe 16 gemäß Fig. 2 ist konkret wie folgt aufgebaut. Die Eingangswelle 19 des Getriebes 16 ist mit dem Traktionsmotor 13 verbunden und treibt durch das Antriebsritzel 28 die erste Getriebestufe 17 an. Das Abtriebszahnrad 29 der ersten Getriebestufe 17 ist durch eine Zwischenwelle 30 mit der dritten Getriebestufe 20b verbunden. Die dritte Getriebestufe 20b ist zwischen die erste und zweite Getriebestufe 17, 20a geschaltet und weist ein erstes Zahnrad 35 auf, das mit der Zwischenwelle 30 verbunden ist, sowie ein zweites Zahnrad 36, das mit der Ausgangswelle 18 des Getriebes 16 verbunden ist. Die Ausgangswelle 18 ist, wie in Fig. 1, einerseits mit dem Differentialgetriebe 15 und andererseits mit der Zentralbremse 14 verbunden.

Die drei Getriebestufen 17, 20a, 20b können dieselben oder unterschiedliche Übersetzungsverhältnisse aufweisen.

Diese Ausführungsform hat den Vorteil, dass der Gestaltungsspielraum bei Platzierung der Zentralbremse 14 hinsichtlich Drehmoment- Drehzahl-Bereich weiter vergrößert wird, was insbesondere den Einsatz einer Zentralbremse 14 mit geringer Zupresskraft, insbesondere einer elektromechanischen Bremse, ermöglicht.

Das Getriebe 16 gemäß Fig. 1, 2 ist nicht schaltbar. Dasselbe gilt für die übrigen Ausführungsbeispiele dieser Anmeldung.

Das Ausführungsbeispiel gemäß Fig. 2 weist zusätzlich zur Zentralbremse 14 zwei Radindividualbremsen 21, die radnah angeordnet und mit der Radachse 12 verbunden sind. Dadurch wird ein redundantes Bremssystem geschaffen, bei dem im Versagensfall eines Teilsystems (Zentralbremse bzw. Radindividualbremsen) das andere Teilsystem eine Bremsfunktion in zumindest eingeschränktem Umfang aufrechterhalten kann. Die Ansteuerung der Radindividualbremsen 21 erfolgt durch das gemeinsame Steuergerät 22, das auch die Zentralbremse 24 ansteuert. Dadurch ist eine Mischbremsung möglich.

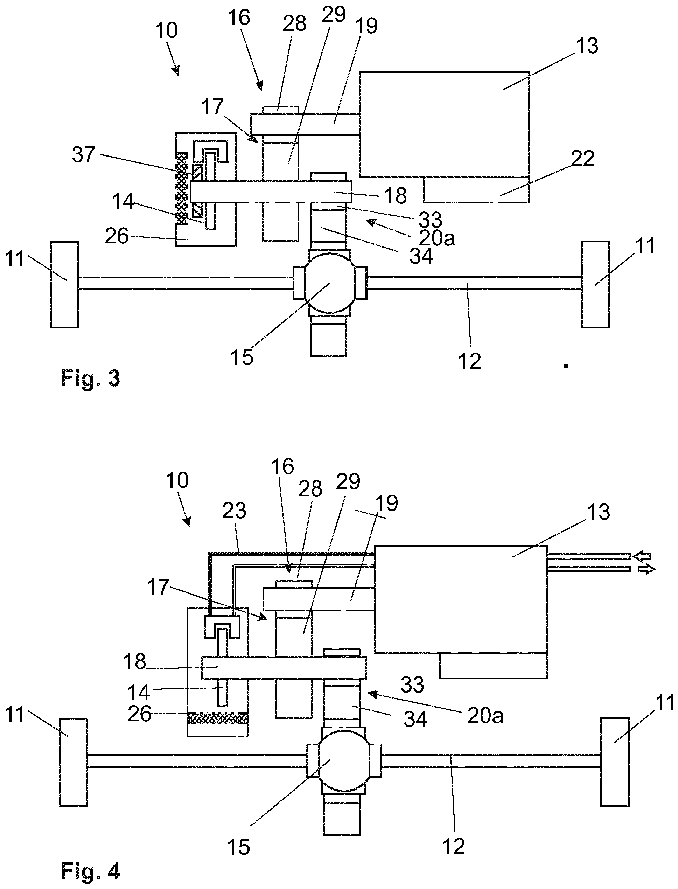

Die Antriebseinheit 10 gemäß Fig. 3 ist ähnlich wie die Antriebseinheit 10 gemäß Fig. 1 aufgebaut und weist zusätzlich einen Bremsstaubkollektor 26 auf, der im Beispiel gemäß Fig. 3 als offener Filter, d.h. als zur Umgebung hin offener Filter aufgebaut ist. Besonders vorteilhaft ist es, wenn eine Bremsstauban- bzw. absauganlage (Impeller, Ventilator, Luftbeschleunigungsmittel [37]) direkt von einer Getriebewelle betrieben wird.

Im Unterschied zu Fig. 3 ist der Bremsstaubkollektor 26 gemäß Fig. 4 als geschlossenes Filtersystem aufgebaut, dass die Zentralbremse 14 einkapselt. Außerdem weist die Zentralbremse 14 eine Einrichtung 23 zur Flüssigkühlung auf, die mit dem Motorkühlkreislauf verbunden ist. Dieser ist durch den Doppelpfeil an den Zu-/Ableitungen der Einrichtung 23 angedeutet. Ein weiterer Synergieeffekt wird dadurch erreicht, dass die Einrichtung 23 zur Flüssigkühlung auch den Traktionsmotor 13 kühlt.

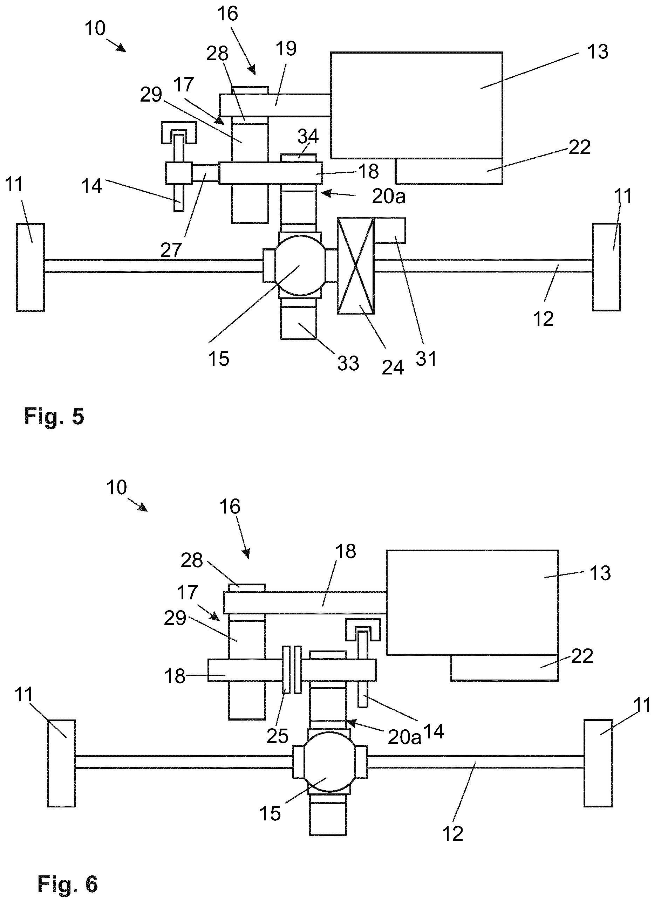

Die Antriebseinheit 10 gemäß Fig. 5 weist eine Torque-Vectoring Einheit 24 auf, die mit der Radachse 12 verbunden und dem Differentialgetriebe 15 nachgeschaltet ist. Die Torque-Vectoring Einheit 24 weist einen Elektromotor 31 und wenigstens ein Torque-Vectoring Getriebe 32 (Verteilergetriebe) auf, das mit der Radachse 12 zur radindividuellen Beeinflussung des auf die Räder 11 wirkenden Drehmoments verbunden ist. Durch die Kombination von Zentralbremse 14 mit der Torque-Vectoring-Einheit 24 können die Radindividualbremsen ersatzlos entfallen, ohne dass dabei auf eine radindividuelle Abbremsung verzichtet werden muss. Dabei wird das Hauptbremsmoment durch die Zentralbremse 14 aufgebracht. Das Differenzdrehmoment zwischen den beiden Rädern 11 der Antriebsachse 12 wird durch die Torque-Vectoring-Einheit 24 erzeugt.

Außerdem ist die Ausgangswelle 18 des Getriebes 16 mit einem Torsionsdämpfer 27 ausgestattet, der die Ausgangswelle 18 mit der Zentralbremse 14 verbindet. Der Einsatz der Zentralbremse 14 kann sich positiv auf die Lärmemissionen auswirken, zum einen durch die Positionierung im "Inneren" des Fahrzeugs selbst, weiterhin durch eine mögliche Kapselung der Zentralbremse 14 in einem Gehäuse. Die aufgrund der höheren Gestaltungsfreiheit gegenüber Radindividualbremsen bezüglich des Bauraums Zwischenschaltung des Torsionsdämpfers 27 zwischen die Zentralbremse 14 und die Ausgangswelle 18 führt zu einem weiter verbesserten NVH-Verhalten (noise vibration harshness).

Fig. 6 zeigt ein Ausführungsbeispiel, bei dem die Ausgangswelle 18 eine Kupplung 25 aufweist, die den Traktionsmotor 13 von der Zentralbremse 14 während des Bremsvorgangs entkoppelt. Konkret ist die Kupplung 25 auf der Getriebezwischenwelle von erster 17 und zweiter Getriebestufe 20a und im Kraftfluss näher am Traktionsmotor als die Zentralbremse angeordnet. Durch die Kupplung 25 wird das Motorschleppmoment (Trägheitsmoment im Bremsfall) entkuppelt, was zu einem verbesserten Ansprechverhalten und zu höhere Dynamik (z.B. für EPS) und/oder zu weiterem Downsizing-Potential führt. Vorteilhafterweise werden Kupplung 25 und Zentralbremse 14 hierbei über einen gemeinsamen Aktuator angesprochen, so dass im Bremsfall die Kupplung 25 automatisch geöffnet wird. Durch diese mechanische Kopplung von Bremse 14 und Kupplung 25 kann insbesondere auch auf ein gesondertes Kupplungssteuergerät bzw. eine eigene Kupplungssteuerung verzichtet werden.

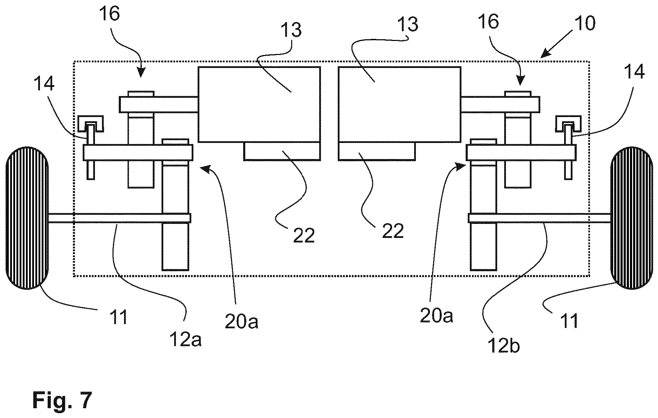

Fig. 7 zeigt ein Ausführungsbeispiel, bei dem die Antriebseinheit 10 für ein zweispuriges Fahrzeug ausgebildet ist und mit einem Zwillingsantrieb ausgestattet ist. Die Radachsen (Halbachsen) 12a, 12b sind unabhängig angetrieben. Beide Räder 11 der Antriebsachse werden durch einen Traktionsmotor 13 angetrieben. Sie sind nicht durch ein Differentialgetriebe verbunden. Ein Ausgleich von Raddrehzahlen während der Kurvenfahrt kann durch Regelung der Traktionsmotoren erfolgen. Jeder Zwillingsmotor ist über ein Übersetzungsgetriebe 16 mit dem Rad verbunden; jedes Übersetzungsgetriebe weist eine Zentralbremse 14 auf. Das Fahrzeug weist in dem Beispiel keine an der Radachse 12a, 12b angebrachte Bremsen (Radindividualbremsen) auf.

Vorzugsweise betrifft die Erfindung eine elektrische Antriebseinheit 10 zum Antrieb wenigstens zweier Räder 11 eines Kraftfahrzeugs, die eine ausschließlich elektrisch antreibbare Radachse 12 aufweist, wobei die Radachse 12 mit wenigstens einem elektrischen Traktionsmotor 13 zur Übertragung eines Antriebsmoments und mit einer Zentralbremse 14 zur Übertragung eines Bremsmoments verbunden ist und ein Differentialgetriebe 15 aufweist, die sich insbesondere dadurch auszeichnet, dass ein Übersetzungsgetriebe 16 mit wenigstens zwei Getriebestufen 17, 20a, 20b und wenigstens einer Getriebezwischenwelle 18, 20 zwischen dem Traktionsmotor 13 und dem Differentialgetriebe 15 angeordnet ist, wobei die Zentralbremse 14 in eine Getriebezwischenwelle 18, 30 des Übersetzungsgetriebes 16 integriert ist.

### Bezugszeichenliste

- 10: Antriebseinheit
- 11: Räder
- 12: Radachse

- 12a: linke Radachse (Halbachse)

- 12b: rechte Radachse (Halbachse)
- 13: Traktionsmotor
- 14: Zentralbremse
- 15: Differentialgetriebe
- 16: Übersetzungsgetriebe
- 17: erste Getriebestufe
- 18: Ausgangswelle
- 19: Eingangswelle
- 20a: zweite Getriebestufe
- 20b: dritte Getriebestufe
- 21: Radindividualbremsen
- 22: Steuergerät
- 23: Einrichtung zur Flüssigkühlung
- 24: Torque-Vectoring Einheit
- 25: Kupplung
- 26: Bremsstaubkollektor
- 27: Torsionsdämpfer
- 28: Antriebsritzel
- 29: Abtriebszahnrad
- 30: Zwischenwelle
- 31: Elektromotor
- 32: Torque Vectoring Getriebe
- 33: erstes Zahnrad der zweiten Getriebestufe
- 34: zweites Zahnrad der zweiten Getriebestufe
- 35: erstes Zahnrad der dritten Getriebestufe
- 36: zweites Zahnrad der dritten Getriebestufe
- 37: Luftfördermittel

## Patentansprüche

1. Elektrische Antriebseinheit (10) zum Antrieb wenigstens zweier Räder (11) eines Kraftfahrzeugs, die eine ausschließlich elektrisch antreibbare Radachse (12) aufweist, wobei die Radachse (12) mit wenigstens einem elektrischen Traktionsmotor (13) zur Übertragung eines Antriebsmoments und mit einer Zentralbremse (14) zur Übertragung eines Bremsmoments verbunden ist,
**dadurch gekennzeichnet, dass**
ein Übersetzungsgetriebe (16) mit wenigstens zwei Getriebestufen (17, 20a, 20b) und wenigstens einer Getriebezwischenwelle (18, 20) zwischen dem Traktionsmotor (13) und der Radachse (12) angeordnet ist, wobei die Zentralbremse (14) in eine Getriebezwischenwelle (18, 30) des Übersetzungsgetriebes (16) integriert ist.

2. Antriebseinheit nach Anspruch 1
**dadurch gekennzeichnet, dass**
die Rotationsachsen der Wellen im Traktionsmotor und Übersetzungsgetriebe achsparallel zur Radantriebsachse ausgebildet sind.

3. Antriebseinheit nach Anspruch 1 oder 2
**dadurch gekennzeichnet, dass**
die Getriebestufe (17, 20a, 20b) des Übersetzungsgetriebes (16) eine Ausgangswelle (18) aufweist, die mit Abstand zur Radachse (12), insbesondere achsparallel, angeordnet und mit der Zentralbremse (14) verbunden ist.

4. Antriebseinheit nach einem der vorhergehenden Ansprüche
**dadurch gekennzeichnet, dass**
das Übersetzungsgetriebe (16) mehrere Zwischenwellen (18, 30) aufweist, von denen eine mit der Zentralbremse (14) verbunden ist.

5. Antriebseinheit nach einem der vorhergehenden Ansprüche
**dadurch gekennzeichnet, dass**
das Übersetzungsgetriebe (16) schaltungsfrei ausgebildet ist.

6. Antriebseinheit nach einem der vorhergehenden Ansprüche
**dadurch gekennzeichnet, dass**
die Zentralbremse (14) als trocken laufende Friktionsbremse ausgebildet ist.

7. Antriebseinheit nach einem der vorhergehenden Ansprüche
**dadurch gekennzeichnet, dass**
die Zentralbremse (14) die einzige Fahrzeugbremse bildet oder die Radachse (12) Radindividualbremsen (21) zusätzlich zur Zentralbremse (14) aufweist.

8. Antriebseinheit nach einem der vorhergehenden Ansprüche
**dadurch gekennzeichnet, dass** die Zentralbremse als Betriebsbremse und/oder Parkbremse und/oder Haltebremse ausgebildet ist.

9. Antriebseinheit nach einem der vorhergehenden Ansprüche
**dadurch gekennzeichnet, dass**
Zentralbremse und/oder Radindividualbremsen als elektromechanische Bremse ausgeführt sind.

10. Antriebseinheit nach einem der vorhergehenden Ansprüche
**dadurch gekennzeichnet, dass**
der Traktionsmotor (13) und die Zentralbremse (14) gemeinsam genutzte Peripherieeinrichtungen aufweisen.

11. Antriebseinheit nach einem der vorhergehenden Ansprüche
**dadurch gekennzeichnet, dass**
wenigstens die Zentralbremse (14), das Übersetzungsgetriebe (16) und der Traktionsmotor (13) in einem gemeinsamen Gehäuse angeordnet sind.

12. Antriebseinheit nach einem der vorhergehenden Ansprüche
**dadurch gekennzeichnet, dass**
wenigstens die Zentralbremse (14) und der Traktionsmotor (13) ein gemeinsames Steuergerät (22) aufweisen.

13. Antriebseinheit nach Anspruch 12
**dadurch gekennzeichnet, dass**
das Steuergerät (22) für eine Mischbremsung konfiguriert ist.

14. Antriebseinheit nach einem der vorhergehenden Ansprüche
**dadurch gekennzeichnet, dass**
die Zentralbremse (14) eine Einrichtung zur Flüssigkühlung (23) aufweist.

15. Antriebseinheit nach Anspruch 14
**dadurch gekennzeichnet, dass**
die Einrichtung zur Flüssigkühlung (23) mit dem Motorkühlkreislauf verbunden oder verbindbar ist.

16. Antriebseinheit nach einem der vorhergehenden Ansprüche
**dadurch gekennzeichnet, dass**
die Radachse (12) eine Torque-Vectoring Einheit (24) aufweist.

17. Antriebseinheit nach einem der vorhergehenden Ansprüche
**dadurch gekennzeichnet, dass**
eine Kupplung (25) zwischen dem Traktionsmotor (13) und der Zentralbremse (14) angeordnet ist.

18. Antriebseinheit nach Anspruch 15
**dadurch gekennzeichnet, dass**
die Kupplung (25) und die Zentralbremse (14) gemeinsam ansteuerbar sind.

19. Antriebseinheit nach einem der vorhergehenden Ansprüche
**dadurch gekennzeichnet, dass**
die Zentralbremse (14) einen Bremsstaubkollektor (26) aufweist.

20. Antriebseinheit nach einem der vorhergehenden Ansprüche
**dadurch gekennzeichnet, dass**
die Zentralbremse (14) mit einem Torsionsdämpfer (27) verbunden ist.

21. Kraftfahrzeug mit einer elektrischen Antriebseinheit nach Anspruch 1.

## Claims

1. An electric drive unit (10) for driving at least two wheels (11) of a motor vehicle, which has an exclusively electrically drivable wheel axle (12), wherein the wheel axle (12) is connected to at least one electric traction motor (13) in order to transmit a drive torque and to a central brake (14) in order to transmit a brake torque,
**characterized in that**
a transmission gear (16) having at least two gear stages (17, 20a, 20b) and at least one intermediate gear shaft (18, 20) is arranged between the traction motor (13) and the wheel axle (12), wherein the central brake (14) is integrated in an intermediate gear shaft (18, 30) of the transmission gear (16).

2. The drive unit as claimed in claim 1,
**characterized in that**
the rotation axes of the shafts in the traction motor and transmission gear are constructed in an axially parallel manner with respect to the wheel drive axle.

3. The drive unit as claimed in claim 1 or claim 2,
**characterized in that**
the gear stage (17, 20a, 20b) of the transmission gear (16) has an output shaft (18) which is arranged with spacing from the wheel axle (12), in particular in an axially parallel manner, and which is connected to the central brake (14).

4. The drive unit as claimed in one of the preceding claims,
**characterized in that**
the transmission gear (16) has a plurality of intermediate shafts (18, 30), of which one is connected to the central brake (14).

5. The drive unit as claimed in one of the preceding claims,
**characterized in that**
the transmission gear (16) is constructed to be switch-free.

6. The drive unit as claimed in one of the preceding claims,
**characterized in that**
the central brake (14) is constructed as a dry-running friction brake.

7. The drive unit as claimed in one of the preceding claims,
**characterized in that**
the central brake (14) forms the only vehicle brake or the wheel axle (12) has individual wheel brakes (21) in addition to the central brake (14).

8. The drive unit as claimed in one of the preceding claims,
**characterized in that** the central brake is constructed as a service brake and/or parking brake and/or holding brake.

9. The drive unit as claimed in one of the preceding claims,
**characterized in that**
the central brake and/or individual wheel brakes are constructed as an electromechanical brake.

10. The drive unit as claimed in one of the preceding claims,
**characterized in that**
the traction motor (13) and the central brake (14) have peripheral devices which are used together.

11. The drive unit as claimed in one of the preceding claims,
**characterized in that**
at least the central brake (14), the transmission gear (16) and the traction motor (13) are arranged in a common housing.

12. The drive unit as claimed in one of the preceding claims,
**characterized in that**
at least the central brake (14) and the traction motor (13) have a common control device (22).

13. The drive unit as claimed in claim 12,
**characterized in that**
the control device (22) is configured for mixed braking.

14. The drive unit as claimed in one of the preceding claims,
**characterized in that**
the central brake (14) has a device (23) for fluid cooling.

15. The drive unit as claimed in 14,
**characterized in that**
the device (23) for fluid cooling is connected or can be connected to the motor cooling circuit.

16. The drive unit as claimed in one of the preceding claims,
**characterized in that**
the wheel axle (12) has a torque vectoring unit (24).

17. The drive unit as claimed in one of the preceding claims,
**characterized in that**
a clutch (25) is arranged between the traction motor (13) and the central brake (14).

18. The drive unit as claimed in claim 15,
**characterized in that**
the clutch (25) and the central brake (14) can be controlled together.

19. The drive unit as claimed in one of the preceding claims,
**characterized in that**
the central brake (14) has a brake dust collector (26).

20. The drive unit as claimed in one of the preceding claims,
**characterized in that**
the central brake (14) is connected to a torsion damper (27).

21. A motor vehicle having an electric drive unit as claimed in claim 1.

## Revendications

1. Unité d'entraînement électrique (10) destinée à entraîner au moins deux roues (11) d'un véhicule automobile qui présente un essieu (12) à propulsion électrique uniquement, l'essieu (12) étant relié à au moins un moteur de traction électrique (13), destiné à transmettre un couple d'entraînement, et à un frein central (14) destiné à transmettre un couple de freinage,
**caractérisée en ce qu'**un engrenage multiplicateur (16), doté d'au moins deux étages d'engrenage (17, 20a, 20b) et d'au moins un arbre intermédiaire d'engrenage (18, 20), est disposé entre le moteur de traction (13) et l'essieu (12), le frein central (14) étant intégré dans un arbre intermédiaire d'engrenage (18, 30) de l'engrenage multiplicateur (16).

2. Unité d'entraînement selon la revendication 1, **caractérisée en ce que** les axes de rotation des arbres dans le moteur de traction et dans l'engrenage multiplicateur sont réalisés de manière parallèle à l'axe d'entraînement de roue.

3. Unité d'entraînement selon la revendication 1 ou 2, **caractérisée en ce que** l'étage d'engrenage (17, 20a, 20b) de l'engrenage multiplicateur (16) présente un arbre de sortie (18) qui est disposé à distance de l'essieu (12), en particulier de manière parallèle à l'axe, et est relié au frein central (14).

4. Unité d'entraînement selon l'une quelconque des revendications précédentes, **caractérisée en ce que** l'engrenage multiplicateur (16) présente plusieurs arbres intermédiaires (18, 30) dont l'un est relié au frein central (14).

5. Unité d'entraînement selon l'une quelconque des revendications précédentes, **caractérisée en ce que** l'engrenage multiplicateur (16) est réalisé sans changement de vitesse.

6. Unité d'entraînement selon l'une quelconque des revendications précédentes, **caractérisée en ce que** le frein central (14) est réalisé sous forme de frein à friction fonctionnant à sec.

7. Unité d'entraînement selon l'une quelconque des revendications précédentes, **caractérisée en ce que** le frein central (14) est le seul frein du véhicule, ou l'essieu (12) présente des freins de roue individuels (21) en plus du frein central (14).

8. Unité d'entraînement selon l'une quelconque des revendications précédentes, **caractérisée en ce que** le frein central est réalisé sous forme de frein de service et/ou de frein de stationnement et/ou de frein de maintien.

9. Unité d'entraînement selon l'une quelconque des revendications précédentes, **caractérisée en ce que** le frein central et/ou les freins de roue individuels sont réalisés sous forme de freins électromécaniques.

10. Unité d'entraînement selon l'une quelconque des revendications précédentes, **caractérisée en ce que** le moteur de traction (13) et le frein central (14) présentent des dispositifs périphériques utilisés en commun.

11. Unité d'entraînement selon l'une quelconque des revendications précédentes, **caractérisée en ce qu'**au moins le frein central (14), l'engrenage multiplicateur (16) et le moteur de traction (13) sont disposés dans un carter commun.

12. Unité d'entraînement selon l'une quelconque des revendications précédentes, **caractérisée en ce qu'**au moins le frein central (14) et le moteur de traction (13) présentent un appareil de commande (22) commun.

13. Unité d'entraînement selon la revendication 12, **caractérisée en ce que** l'appareil de commande (22) est configuré pour un freinage mixte.

14. Unité d'entraînement selon l'une quelconque des revendications précédentes, **caractérisée en ce que** le frein central (14) présente un dispositif destiné au refroidissement par liquide (23).

15. Unité d'entraînement selon la revendication 14, **caractérisée en ce que** le dispositif de refroidissement par liquide (23) est ou peut être relié au circuit de refroidissement du moteur.

16. Unité d'entraînement selon l'une quelconque des revendications précédentes, **caractérisée en ce que** l'essieu (12) présente une unité à vecteur de couple (24) .

17. Unité d'entraînement selon l'une quelconque des revendications précédentes, **caractérisée en ce qu'**un embrayage (25) est disposé entre le moteur de traction (13) et le frein central (14).

18. Unité d'entraînement selon la revendication 15 **caractérisée en ce que** l'embrayage (25) et le frein central (14) peuvent être pilotés en commun.

19. Unité d'entraînement selon l'une quelconque des revendications précédentes, **caractérisée en ce que** le frein central (14) présente un collecteur de poussière de frein (26).

20. Unité d'entraînement selon l'une quelconque des revendications précédentes, **caractérisée en ce que** le frein central (14) est relié à un amortisseur de torsion (27) .

21. Véhicule automobile comprenant une unité d'entraînement électrique selon la revendication 1.
